# EUROPEAN PATENT SPECIFICATION

(11) **EP 2 983 279 B1**
(45) Date of publication and mention of the grant of the patent: **22.01.2020**
(21) Application number: 14179918.9
(22) Date of filing: 05.08.2014
(51) Int. Cl.: H02K 19/10, D06F 37/30

(54) **Household appliance**
Haushaltgerät
Appareil ménager

(43) Date of publication of application: 10.02.2016
(73) Proprietor: E.G.O. Elektro-Gerätebau GmbH, 75038 Oberderdingen (DE)
(72) Inventor: Torres Sanchez, Antoni, 08520 Barcelona (ES); Bargallo Perpina, Ramon, 08912 Badalona, Barcelona (ES)
(74) Representative: Patentanwälte Ruff, Wilhelm, Beier, Dauster & Partner mbB

(56) References cited:
- EP-A1- 0 410 784
- EP-A2- 2 611 008
- WO-A1-2011/030499
- WO-A1-2012/000561
- JP-A- 2000 237 492
- US-A- 5 917 263
- US-A1- 2002 089 251
- US-A1- 2002 134 118
- US-A1- 2004 150 282
- US-A1- 2012 212 094
- US-A1- 2014 139 154

## Description

The invention relates to a household appliance, e.g. in form of a washing machine, having an electric motor driving a functional unit, e.g. in form of a washing machine drum.

EP 0 410 784 A1 discloses an electric motor being adapted to drive a laundry machine, wherein the electric motor is a synchronous reluctance motor having a number of distributed stator slot windings.

US 2014/0139154 A1 discloses a current vector controlled synchronous reluctance motor.

It is the object of the invention to provide a household appliance comprising an electric motor driving a functional unit having an increased efficiency.

The invention solves this object by providing a household appliance according to claim 1.

The household appliance comprises a drivable or rotatable functional unit.

The household appliance further comprises an electric motor being adapted to drive or rotate (cause a rotation of) the functional unit. The electric motor may be adapted to drive or rotate the functional unit directly. Alternatively, a belt, a gear, etc. may be provided between the electric motor and the functional unit.

The electric motor is a synchronous reluctance motor having concentrated stator (slot) windings.

The synchronous reluctance motor comprises a stator. The stator comprises a number ns of stator slots. Each of the number of stator slots comprises a corresponding concentrated stator slot winding.

The synchronous reluctance motor further comprises a rotor. The rotor comprises a number nr of rotor poles.

A ratio r = ns/nr between the number of stator slots and the number of rotor poles is 9/6, or 9/8, or 12/8. The number ns of stator slots may be equal to 9 or 12. The number nr of rotor poles may be equal to 6 or 8. The inventive ratio between the number of stator slots and the number of rotor poles significantly reduces a torque ripple generated by the synchronous reluctance motor, thus enabling the use of synchronous reluctance motors for household appliances. The synchronous reluctance motor having concentrated stator slot windings has a higher efficiency and causes lower costs compared to a synchronous reluctance motor having distributed stator windings.

The electric motor has a skewed rotor technique, i.e. the rotor sheets may be arranged twisted by a given degree with respect to a respective previous rotor sheet, for example by 20 angular degrees total. By performing the skew technique, torque ripple is further reduced.

The household appliance comprises a control unit, e.g. in form of a microprocessor and/or an electronic frequency converter. The control unit may be adapted to control the operation of the household appliance, e.g. control a washing process, accept user inputs, drive display units, etc. The control unit, e.g. in form of the electronic frequency converter, is further adapted to generate (electrical) control signals, wherein the control signals are applied to corresponding ones of the stator slot windings. The control unit may e.g. generate three pulse width modulated control signals or voltages, wherein a first control voltage is applied to a first set of stator slot windings, a second control voltage is applied to a second set of stator slot windings, and third control voltage is applied to a third set of stator slot windings, each set comprising three or four different stator slot windings chosen from the number of stator slot windings.

The control unit is adapted to generate the control signals such that a torque ripple caused by the electric motor is reduced. Since the torque ripple of a synchronous reluctance motor has a periodical evolution depending of the angular rotor position or rotation angle, the control signals may be generated such that they cause a specific current shape as a function of the rotation angle of the rotor to minimize the torque ripple evolution.

The control unit is adapted to generate the control signals based on a vector control, the vector control conventionally using current components Iq und Id as set points. As far as the general principles of vector controls are concerned, reference is made to the corresponding literature.

If the rotational frequency of the electric motor is lower than a first threshold frequency, the control unit is adapted to modulate the current components Iq und Id in response to a rotation angle of the rotor (and in response to further parameters, if any) such that an angle of a resulting current I, defined by the current components Iq und Id, depends on the rotation angle of the rotor.

In other words, the current I may move along a current trajectory having a magnitude and/or an angle depending, inter alia, on the rotation angle of the rotor.

According to the invention, apart from the current regulation due to load effects, the control unit performs a modulated regulation based on tracking the optimal motor working point, taking into account the torque ripple related to the rotation angle of the rotor, and the optimal relation between Id/lq based on the amount of current delivered to the motor.

If the rotational frequency of the electric motor is higher than a second threshold frequency, wherein the second threshold frequency may be identical to or higher than the first threshold frequency, the control unit is adapted to modulate the current components Iq und Id in response to the rotation angle of the rotor (and in response to further parameters, if any) such that an angle of a resulting current I is constant and the magnitude of the resulting current I varies. In this specific rotational frequency range, the current module is reduced and the current angle is kept constant. This avoids reducing the Id value more than a given amount and increases the possible motor speed range for the classical combination of a synchronous reluctance motor and inverter motor control.

If the first and second threshold frequency differ and if the rotational frequency of the electric motor is higher than the first threshold frequency but lower than the second threshold frequency, the control unit may be adapted to modulate the current components Iq und Id in response to the rotation angle of the rotor such that an angle of a resulting current I varies and the magnitude of the resulting current I is constant.

The torque ripple value depends directly on the rotation angle of the rotor, in some cases the torque variation is over 60 %. Consequently, the synchronous reluctance motor having concentrated stator slot windings cannot be used as it is in home appliances. According to the invention, the skew technique together with the specific motor control reduces the torque ripple from 60% to less than 12%. That allows the use of synchronous reluctance motors having concentrated stator slot windings for home appliances applications.

The functional unit may be a washing machine drum; and/or a dryer drum; and/or a fan impeller; and/or a pump.

The invention will now be described in detail with respect to the drawings.
- Fig. 1: schematically depicts a household appliance in form a washing machine comprising an electric motor driving a functional unit in form of a washing machine drum,
- Fig. 2: schematically depicts the electric motor of Fig. 1 in more detail,
- Fig. 3: schematically depicts current components Iq und Id and a resulting current trajectory used in a vector control to reduce a torque ripple at lower rotational speeds, and
- Fig. 4: schematically depicts the current components Iq und Id and a resulting current trajectory used in a vector control in three operational modes.

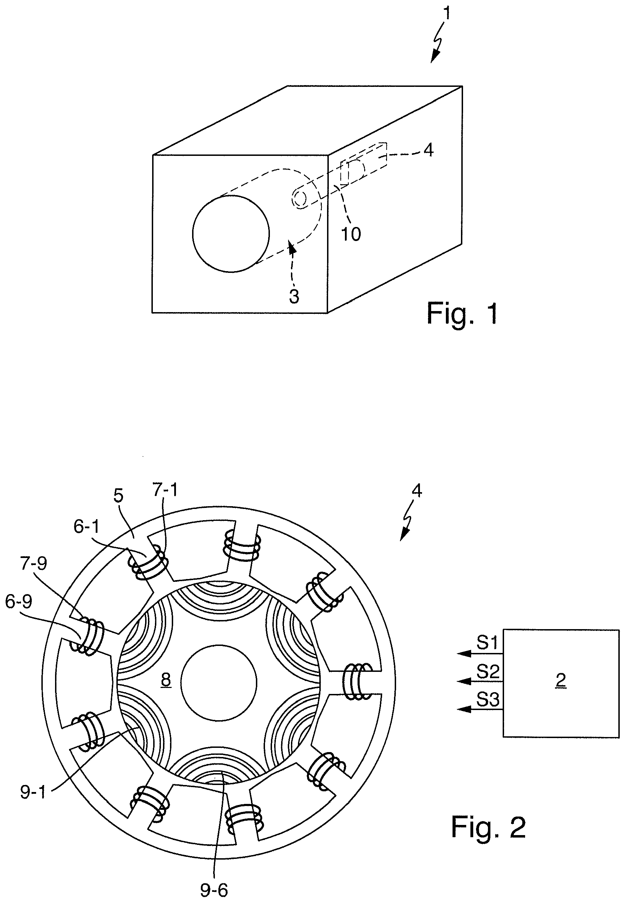

Fig. 1 shows a household appliance in form a washing machine 1 comprising an electric motor 4 driving a functional unit in form of a washing machine drum 3. The electric motor 4 is conventionally coupled to the washing machine drum 3 by means of a belt 10.

Fig. 2 schematically depicts the electric motor 4 of Fig. 1 in more detail.

The electric motor 4 is a synchronous reluctance motor having a stator 5 and a rotor 8.

The stator 5 has nine stator slots 6_1 - 6_9 with concentrated stator slot windings 7_1 to 7_9. The rotor 8 has six rotor poles 9_1 to 9_6, thus a ratio between the number of stator slots and the number of rotor poles equals 9/6. Self-evidently, the ration could also be chosen to 9/8, or 12/8.

A control unit 2 acting as an electronic frequency converter is adapted to generate control voltages S1, S2, S3 being applied to corresponding ones of the concentrated stator slot windings 7_1 to 7_9. The control unit 2 acting as the electronic frequency converter may generate the signals S1, S2, S3 such that a wide revolution speed of the electric motor 4 is settable.

The control unit 2 is adapted to generate the control voltages S1, S2, S3 such that a torque ripple is reduced. Since the torque ripple has a periodical evolution depending of the rotation angle of the rotor, the control signals S1, S2, S3 are generated such that they cause a specific current shape as a function of the rotation angle of the rotor to minimize the torque ripple evolution.

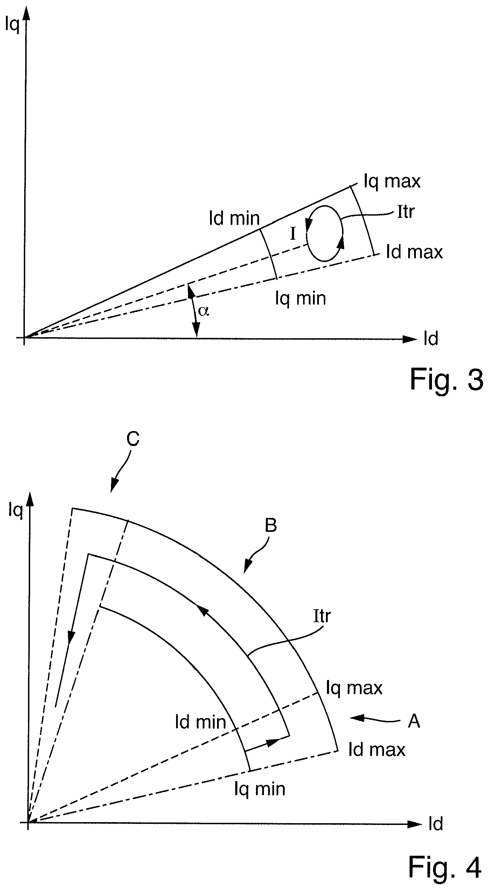

Fig. 3 schematically depicts current components Iq und Id and a resulting current trajectory Itr used in a vector control performed by the control unit 2 to reduce a torque ripple at lower rotational speeds. The vector control uses the current components Iq und Id conventionally as set points. Thus, reference is insofar made to the relevant technical literature.

The control unit 2 is adapted to modulate the current components Iq und Id in response to the rotation angle of the rotor such that an angle α of a resulting current I lying on the current trajectory Itr depends on the rotation angle of the rotor. The current component Iq lies within a range defined between Iq_min and Iq_max and the current component Id lies within a range defined between Id_min and Id_max.

Fig. 4 schematically depicts the current components Iq und Id and the resulting current trajectory Itr used in the vector control in three operational modes A, B and C. The operational mode A has already been depicted in Fig. 3 in more detail.

In operational mode A (constant torque mode) corresponding to a rotational frequency occurring during a typical washing process of the washing machine 1 the magnitude and the angle of the current I are respectively variable.

In operational mode B (medium deflux region) corresponding to higher rotational frequencies e.g. occurring during dashing the magnitude of the current I is constant and the angle α of the current I is variable.

In operational mode C (extreme deflux region) corresponding to very high rotational frequencies e.g. occurring during dashing the magnitude of the current I is variable and the angle α of the current I is constant.

The invention allows the use of synchronous reluctance motors having concentrated stator slot windings for home appliances applications.

## Claims

1. Household appliance (1), comprising:
- a drivable, especially rotatable, functional unit (3),
- an electric motor (4) being adapted to drive the functional unit (3), wherein the electric motor (4) is a synchronous reluctance motor having
- a stator (5), the stator (5) having a number ns of stator slots (6_1 - 6_9) with concentrated stator slot windings (7_1 - 7_9), and
- a rotor (8), the rotor having a number nr of rotor poles (9_1 - 9_6),
- wherein a ratio r = ns/nr between the number of stator slots (6_1 - 6_9) and the number of rotor poles is 9/6, or 9/8, or 12/8, and
- a control unit (2), adapted to control the operation of the household appliance (1) and to generate control signals (S1, S2, S3), wherein the control signals (S1, S2, S3) are applied to corresponding stator slot windings (7_1 - 7_9),
**characterized in that**
- the control unit (2) is adapted to generate the control signals (S1, S2, S3) such that a torque ripple is reduced,
- the control unit (2) is adapted to generate the control signals (S1, S2, S3) based on a vector control, the vector control using current components Iq und Id as set points,
- wherein if the rotational frequency of the electric motor is lower than a first threshold frequency, the control unit (2) is adapted to modulate the current components Iq und Id in response to a rotation angle of the rotor such that an angle α of a current I, defined by the current components Iq und Id, depends on the rotation angle of the rotor, and
- wherein if the rotational frequency of the electric motor is higher than a second threshold frequency, the control unit (2) is adapted to modulate the current components Iq und Id such that an angle of a resulting current I is constant.

2. Household appliance according to claim 1, wherein
- the electric motor (4) has a skewed rotor (8).

3. Household appliance according to claim 1 or 2, wherein
- the functional unit (3) is a washing machine drum.

4. Household appliance according to claim 1 or 2, wherein
- the functional unit is a dryer drum.

5. Household appliance according to claim 1 or 2, wherein
- the functional unit is a fan.

6. Household appliance according to claim 1 or 2, wherein
- the functional unit is a pump.

## Patentansprüche

1. Haushaltsgerät (1), aufweisend:
- eine antreibbare, insbesondere drehbare, Funktionseinheit (3),
- einen Elektromotor (4), der dazu ausgebildet ist, die Funktionseinheit (3) anzutreiben, wobei der Elektromotor (4) als Synchron-Reluktanzmotor ausgebildet ist, der aufweist
- einen Stator (5), wobei der Stator (5) eine Anzahl ns von Statorschlitzen (6_1 bis 6_9) mit konzentrierten Statorschlitzwicklungen (7_1 bis 7_9) aufweist, und
- einen Rotor (8), wobei der Rotor eine Anzahl nr von Rotorpolen (9_1 bis 9_6) aufweist,
- wobei ein Verhältnis r = ns/nr zwischen der Anzahl an Statorschlitzen (6_1 bis 6_9) und der Anzahl an Rotorpolen 9/6 oder 9/8 oder 12/8 beträgt, und
- eine Steuerungseinheit (2), die dazu ausgebildet ist, den Betrieb des Haushaltsgeräts (1) zu steuern und Steuerungssignale (S1, S2, S3) zu erzeugen, wobei entsprechende Statorschlitzwicklungen (7_1 bis 7_9) mit den Steuerungssignalen (S1, S2, S3) beaufschlagt werden,
**dadurch gekennzeichnet, dass**
- die Steuerungseinheit (2) dazu ausgebildet ist, die Steuerungssignale (S1, S2, S3) derart zu erzeugen, dass eine Drehmomentwelligkeit reduziert wird,
- die Steuerungseinheit (2) dazu ausgebildet ist, die Steuerungssignale (S1, S2, S3) basierend auf einer Vektorregelung zu erzeugen, wobei die Vektorregelung Stromkomponenten Iq und Id als Sollwerte verwendet,
- wobei, wenn die Rotationsfrequenz des Elektromotors niedriger ist als eine erste Schwellenfrequenz, die Steuerungseinheit (2) dazu ausgebildet ist, die Stromkomponenten Iq und Id in Abhängigkeit von einem Rotationswinkel des Rotors derart zu modulieren, dass ein Winkel α eines Stroms I, der durch die Stromkomponenten Iq und Id definiert ist, vom Rotationswinkel des Rotors abhängig ist, und
- wobei, wenn die Rotationsfrequenz des Elektromotors höher ist als eine zweite Schwellenfrequenz, die Steuerungseinheit (2) dazu ausgebildet ist, die Stromkomponenten Iq und Id derart zu modulieren, dass ein Winkel eines resultierenden Stroms I konstant ist.

2. Haushaltsgerät nach Anspruch 1, wobei
- der Elektromotor (4) einen geschrägten Rotor (8) aufweist.

3. Haushaltsgerät nach Anspruch 1 oder 2, wobei
- es sich bei der Funktionseinheit (3) um eine Waschmaschinentrommel handelt.

4. Haushaltsgerät nach Anspruch 1 oder 2, wobei
- es sich bei der Funktionseinheit um eine Trocknertrommel handelt.

5. Haushaltsgerät nach Anspruch 1 oder 2, wobei
- es sich bei der Funktionseinheit um ein Gebläse handelt.

6. Haushaltsgerät nach Anspruch 1 oder 2, wobei
- es sich bei der Funktionseinheit um eine Pumpe handelt.

## Revendications

1. Appareil ménager (1), comportant :
- une unité fonctionnelle (3) pouvant être entraînée, en particulier en rotation,
- un moteur électrique (4) qui est prévu pour entraîner l'unité fonctionnelle (3), le moteur électrique (4) étant un moteur à réluctance synchrone comprenant
- un stator (5), le stator (5) comprenant un nombre ns d'encoches (6_1 à 6_9) de stator comportant des enroulements (7_1 à 7_9) concentrés d'encoches de stator, et
- un rotor (8), le rotor comprenant un nombre nr de pôles (9_1 à 9_6) de rotor,
- un rapport r = ns/nr entre le nombre d'encoches (6_1 à 6_9) de stator et le nombre de pôles de rotor étant de 9/6, ou de 9/8, ou de 12/8, et
- une unité (2) de commande, prévue pour commander le fonctionnement de l'appareil ménager (1) et pour générer des signaux (S1, S2, S3) de commande, les signaux (S1, S2, S3) de commande étant appliqués à des enroulements (7_1 à 7_9) correspondants d'encoches de stator,
**caractérisé en ce que**
- l'unité (2) de commande est prévue pour générer les signaux (S1, S2, S3) de commande de telle façon qu'une ondulation de couple soit réduite,
- l'unité (2) de commande est prévue pour générer les signaux (S1, S2, S3) de commande selon une commande vectorielle, la commande vectorielle utilisant des composantes de courant Iq et Id en tant que points de consigne,
- si la fréquence de rotation du moteur électrique est inférieure à une première fréquence seuil, l'unité (2) de commande est prévue pour moduler les composantes de courant Iq et Id en réaction à un angle de rotation du rotor de telle façon qu'un angle α d'un courant I, défini par les composantes de courant Iq et Id, dépende de l'angle de rotation du rotor, et
- si la fréquence de rotation du moteur électrique est supérieure à une seconde fréquence seuil, l'unité (2) de commande est prévue pour moduler les composantes de courant Iq et Id de telle façon qu'un angle d'un courant résultant I soit constant.

2. Appareil ménager selon la revendication 1,
- le moteur électrique (4) étant doté d'un rotor (8) en biais.

3. Appareil ménager selon la revendication 1 ou 2,
- l'unité fonctionnelle (3) étant un tambour de machine à laver.

4. Appareil ménager selon la revendication 1 ou 2,
- l'unité fonctionnelle étant un tambour de séchoir.

5. Appareil ménager selon la revendication 1 ou 2,
- l'unité fonctionnelle étant un ventilateur.

6. Appareil ménager selon la revendication 1 ou 2,
- l'unité fonctionnelle étant une pompe.
